# EUROPÄISCHE PATENTANMELDUNG

(11) **EP 3 764 522 A1**
(43) Veröffentlichungstag der Anmeldung: **13.01.2021**
(21) Anmeldenummer: 20183706.9
(22) Anmeldetag: 02.07.2020
(51) Int. Cl.: H02K 7/14, H02K 7/06, H02K 11/33, H02K 5/04, F04B 17/03, F04B 23/04, F04C 14/02, F04C 14/04, F04D 13/06, F03G 7/08, B60G 13/14

(54) **MPE-ACHSSATZ MIT GEMEINSAMER ECU**

(30) Priorität: 08.07.2019 DE 102019118384
(71) Anmelder: RAPA Automotive GmbH & Co. KG, 95100 Selb (DE)
(72) Erfinder: Kemnitz, Rocco, 95100 Selb (DE); Rubitzko, Tim, 95100 Selb (DE); Leupold, Werner, 95100 Selb (DE)
(74) Vertreter: Klunker IP Patentanwälte PartG mbB

(57) **Zusammenfassung**

Eine Vorrichtung (1) zum Bereitstellen von hydraulischer Energie in einem Fahrwerksystem (2) eines Fahrzeugs umfasst eine erste hydraulische Pumpe (11) und einen ersten Elektromotor (12) zum Antreiben der ersten hydraulischen Pumpe (11), eine zweite hydraulische Pumpe (21) und einen zweiten Elektromotor (22) zum Antreiben der zweiten hydraulischen Pumpe (21) und eine gemeinsame Elektronikeinheit (30), welche eingerichtet ist, den ersten und den zweiten Elektromotor (12,22) anzusteuern, wobei die beiden Elektromotoren (12,22) und die beiden Pumpen (11,21) vorzugsweise baugleich ausgestaltet sind und/oder jeweils erste und zweite Motor-Pumpe-Gruppen (10, 20) bilden.

## Beschreibung

### GEBIET DER ERFINDUNG

Die vorliegende Erfindung betrifft eine Vorrichtung zum Bereitstellen von hydraulischer Energie in einem aktiven Fahrwerk eines Fahrzeugs, einen Bausatz für eine derartige Vorrichtung sowie ein Fahrwerksystem mit einer derartigen Vorrichtung.

### HINTERGRUND DER ERFINDUNG

Aktive Fahrwerksysteme sind prinzipiell bekannt, beispielsweise aus DE 39 02 743 C1 oder DE 2 020 292 A1. Ein aktives Fahrwerk weist hydraulisch steuerbare Stoßdämpfer auf, bei denen die beiden Zylinder- bzw. Dämpferkammern des Arbeitszylinders eines gegebenen Stoßdämpfers nicht lediglich über ein oder mehrere, gegebenenfalls steuerbare Dämpfungs- bzw. Drosselventile miteinander verbunden sind, sondern bei denen der Füllzustand der Zylinderkammern aktiv gesteuert werden kann und entsprechend bedarfsweise hydraulische Kräfte in das Fahrwerk eingeleitet werden können. Die beiden Zylinderkammern eines Stoßdämpfers können beispielsweise über eine hydraulische Pumpe miteinander verbunden sein.

Dadurch kann durch Pumpen von Hydraulikfluid beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor prinzipiell auch dazu genutzt werden, durch Rekuperation gewonnene elektrische Energie in das Bordnetz des Fahrzeugs zurück zu speisen. Weiterhin können auch bei Verwendung der Pumpe unterschiedliche Dämpfungsverhalten eingestellt werden, beispielsweise "weich" oder "hart" oder dynamisch bzw. abhängig vom Fahrverhalten oder der Untergrundbeschaffenheit.

Zur Steuerung des Elektromotors einer gegebenen hydraulischen Pumpe ist dabei üblicherweise eine entsprechende Ansteuereinheit vorgesehen, wodurch eine sogenannte Motor-Pumpe-Einheit geschaffen wird, die eine Pumpe, einen Elektromotor und eine Ansteuereinheit (ECU, Electric Control Unit) aufweist und häufig als bauliche Einheit ausgebildet ist. Es ist bekannt für jeden zu steuernden Stoßdämpfer genau eine Motor-Pumpe-Einheit vorzusehen. Dabei kann die entsprechende Motor-Pumpe-Einheit unmittelbar an oder zumindest nahe an dem jeweiligen Stoßdämpfer montiert sein. Aus Bauraumgründen ist dies jedoch nicht immer möglich, so dass die entsprechende Motor-Pumpe-Einheit ggf. entfernt vom Stoßdämpfer im Fahrzeug platziert werden muss. Dabei muss auf die korrekte hydraulische Verbindung und die korrekte elektrische Verkabelung geachtet werden.

### ZUSAMMENFASSUNG DER ERFINDUNG

Aufgabe der Erfindung ist es, eine Vorrichtung zum Bereitstellen von hydraulischer Energie in einem aktiven Fahrwerksystem eines Fahrzeugs zu schaffen, welche kostengünstig und platzsparend ausgeführt ist. Es ist weiterhin Aufgabe der vorliegenden Erfindung einen entsprechenden Bausatz und ein entsprechendes Fahrwerksystem anzugeben.

Die Aufgabe wird gelöst durch eine Vorrichtung mit den Merkmalen der unabhängigen Ansprüche. Bevorzugte Ausgestaltungen und Weiterbildungen sind in den davon abhängigen Ansprüchen angegeben.

Erfindungsgemäß wird eine Vorrichtung zum Bereitstellen von hydraulischer Energie in einem Fahrwerkssystem eines Fahrzeugs bereitgestellt, umfassend
- eine erste hydraulische Pumpe und einen ersten Elektromotor zum Antreiben der ersten hydraulischen Pumpe,
- eine zweite hydraulische Pumpe und einen zweiten Elektromotor zum Antreiben der zweiten hydraulischen Pumpe, und
- eine gemeinsame Elektronikeinheit, welche eingerichtet ist, zugleich sowohl den ersten Elektromotor als auch den zweiten Elektromotor anzusteuern.

Dabei sind beide Elektromotoren und beide Pumpen vorzugsweise jeweils baugleich bzw. identisch ausgestaltet, das heißt sie weisen gleiche Eigenschaften und Abmessungen auf, und/oder bilden bevorzugt jeweils erste und zweite Motor-Pumpe-Gruppen.

Die gemeinsame Elektronikeinheit ist sowohl mit dem ersten Elektromotor als auch mit dem zweiten Elektromotor elektrisch verbunden und ist eingerichtet, zugleich sowohl den ersten Elektromotor als auch den zweiten Elektromotor und somit die jeweiligen Pumpen anzusteuern. Die gemeinsame Elektronikeinheit ersetzt somit (zwei) getrennte bzw. separate Elektronik- bzw. Ansteuereinheiten für die Elektromotoren bzw. die Pumpen, wie sie beispielsweise in den bekannten Motor-Pumpe-Einheiten eingesetzt werden. Mit Vorteil werden die beiden Elektromotoren ausschließlich und vollständig über die gemeinsame Elektronikeinheit angesteuert und/oder von dieser mit elektrischer Energie versorgt, so dass die Elektromotoren neben der elektrischen Verbindung zu der gemeinsamen Elektronikeinheit keine weiteren elektrischen Anschlüsse aufweisen. Dabei sind die beiden Elektromotoren und die beiden Pumpen vorzugsweise jeweils baugleich bzw. identisch ausgestaltet, das heißt sie weisen gleiche Eigenschaften und Abmessungen auf. Weiterhin bildet die gemeinsame Elektronikeinheit üblicherweise eine (einzige) bzw. genau eine bauliche Einheit (Baueinheit). Entsprechend ist üblicherweise die gemeinsame Elektronikeinheit vollständig in einem einzigen gemeinsamen Gehäuse angeordnet, so dass sämtliche Komponenten der gemeinsamen Elektronikeinheit in einem gemeinsamen Gehäuse angeordnet sind.

Das erfindungsgemäße Vorsehen einer gemeinsamen Elektronikeinheit für beide Elektromotoren ermöglicht verschiedene Synergieeffekte.

Im Hinblick auf den strukturellen Aufbau der gemeinsamen Elektronikeinheit können verschiedene Komponenten wie Mikrocontroller, Kondensatoren, insbesondere Hochvoltkondensatoren, elektrische Filterelemente, insbesondere Eingangs- und/oder EMV-Filter, und Leistungstransistoren üblicherweise für beide Elektromotoren gemeinsam verwendet werden, so dass die Anzahl dieser Komponenten im Vergleich mit in zwei separaten Ansteuereinheiten für bekannte Motor-Pumpe-Einheiten verbauten Komponenten reduziert wird. So ist beispielsweise in der gemeinsamen Elektronikeinheit bevorzugt nur genau ein Logikteil und/oder genau ein Mikrocontroller zur Steuerung beider Elektromotoren vorgesehen. Durch die verringerte Komponentenanzahl reduziert/reduzieren sich unter anderem der benötigte Bauraum, die Bauteilkosten und der Montageaufwand.

Zudem kann in der gemeinsamen Elektronikeinheit üblicherweise die Größe bzw. Mächtigkeit der verschiedenen Komponenten im Vergleich mit (der Summe von) in zwei Ansteuereinheiten für bekannte Motor-Pumpe-Einheiten (mit vergleichbaren Betriebsparametern) verbauten Komponenten reduziert werden, da es beispielsweise häufig nicht notwendig ist zu gewährleisten, dass beide Elektromotoren bzw. Pumpen zeitgleich mit maximaler Leistung arbeiten oder dies zumindest nicht dauerhaft notwendig ist. Bevorzugt können daher beispielsweise Kondensatoren mit einer kleineren Gesamtkapazität und/oder eine Leistungselektronik mit einer kleineren (Dauer-)Leistung vorgesehen werden, was die Bauteilkosten und auch den benötigten Bauraum reduziert. Beispielsweise kann die Gesamtkapazität der (Hochvolt-)Kondensatoren und/oder die maximale (Dauer-)Ausgangsleistung - im Vergleich mit der Summe von in zwei Ansteuereinheiten für bekannte Motor-Pumpe-Einheiten mit vergleichbaren Betriebsparametern, insbesondere mit identischer Dauer-Ausgangsleistung verbauten (Hochvolt-)Kondensatoren - um 25% oder mehr reduziert werden. Bevorzugt ist die maximale (Dauer-)Ausgangsleistung der gesamten Leistungselektronik der gemeinsamen Elektronikeinheit kleiner als die Summe der maximalen (Dauer-)Leistungen von erstem und zweitem Elektromotor, beispielsweise kleiner oder gleich 95%, 90%, 85%, 80%, 75%, 70%, 60% oder 50%. Alternativ kann auch eine maximale (Dauer-)Ausgangsleistung der Leistungselektronik der gemeinsamen Elektronikeinheit vorgesehen sein, die 100% der maximalen (Dauer-) Leistungen von erstem und zweitem Elektromotor entspricht. Bevorzugt liegt weiterhin die maximale (Dauer-)Leistung des Elektromotors im Bereich zwischen 0,1 und 5 kW und beträgt beispielsweise 0,1, 0,2, 0,5, 1, 1,5, 2, 2,5, 3, 4 oder 5 kW, wobei jeder der genannten Werte auch eine Ober- oder Untergrenze des genannten Wertebereichs darstellen kann. Dabei liegt der Betriebsdruck im unbelasteten Zustand vorzugsweise zwischen 5 und 25 bar, wobei im Betrieb Spitzenwerte von über 200 bar auftreten können. Dabei liegt die Fördermenge des Hydraulikfluids vorzugsweise im Bereich zwischen 15 und 30 1/min bei Druckdifferenzen an den beiden Leitungsanschlüssen des Pumpenanschlusses bis zu 30 bar. Insbesondere bei höheren Druckdifferenzen ist der Volumenstrom auch abhängig von der Leistung bzw. Baugröße der Motor-Pumpe-Gruppe. Mit einem Elektromotor mit einer Leistung zwischen 3 und 5 kW bzw. einem Außendurchmesser im Bereich zwischen 90 und 120 mm beträgt der Volumenstrom typischerweise bis zu 10 1/min bei einer Druckdifferenz im Bereich zwischen 100 und 150 bar. Die Drehzahlen des Elektromotors und damit auch der hydraulischen Pumpe sind dabei proportional zum Volumenstrom. Die maximalen Drehzahlen liegen typischerweise im Bereich zwischen 5000 und 10.000 U/min.

Synergieeffekte ergeben sich auch beim Verbauen, insbesondere bei der Verkabelung bzw. beim elektrischen Anschließen der erfindungsgemäßen Vorrichtung, die bevorzugt genau einen Steueranschluss, beispielsweise für einen CAN-Bus, der auch einen Versorgungsspannungsanschluss beinhalten kann, und genau einen Leistungsanschluss, beispielsweise für 48V, welcher auch als Hochvoltanschluss für beispielsweise 400V oder 800V ausgeführt sein kann, aufweist, welche besonders bevorzugt jeweils unmittelbar an der gemeinsamen Elektronikeinheit angeordnet sind. Es werden somit weniger Anschlusskabel als in dem Fall von zwei separaten, bekannten Motor-Pumpe-Einheiten benötigt, wodurch auch ein unbeabsichtigtes Vertauschen dieser Anschlusskabel ausgeschlossen ist. Entsprechend muss nur genau eine Elektronikeinheit pro Achse angeschlossen werden. Alternativ kann auch eine Vielzahl von Steueranschlüssen und/oder Leistungs- bzw. Hochvoltanschluss vorgesehen sein. Insbesondere kann es vorteilhaft sein zwei oder mehr Leistungsanschlüsse vorzusehen, insbesondere im Fall einer geringen Versorgungsspannung von beispielsweise 48V, um eine ausreichende Energieversorgung der erfindungsgemäßen Vorrichtung zu gewährleisten.

Bevorzugt sind die Elektromotoren vierquadrantenfähig bzw. als Elektromotorgenerator ausgebildet. Dies gestattet einen wechselweisen bzw. abwechselnden Betrieb als elektrischer Antrieb und/oder als elektrischer Generator (Rekuperationsbetrieb), womit beispielsweise in Folge eines Druckstoßes an der Pumpe (beispielsweise in Folge eines mechanischen Stoßes auf einen Stoßdämpfer) hydraulische Energie über die Pumpe aus dem Stoßdämpfer bzw. dem Fahrwerksystem als elektrische Energie zurückgewonnen werden kann.

Die in Folge des Rekuperationsbetriebs gewonnene elektrische Energie kann im einfachsten Fall in ein Bordnetz eingespeist werden. Die erfindungsgemäße Vorrichtung mit der gemeinsamen Elektronikeinheit gestattet es jedoch auch, die in einem Elektromotor zurückgewonnene elektrische Energie teilweise oder vollständig unmittelbar und beispielsweise ohne Umweg über das Bordnetz direkt in den anderen Elektromotor einzuspeisen. Dies gestattet eine Verringerung der in das Bordnetz eingespeisten Energiemenge. Entsprechend können elektrische Energiespeicher beispielsweise im Bordnetz kleiner und entsprechend kostengünstiger ausgestaltet werden.

Die erste und/oder zweite hydraulische Pumpe ist dabei vorzugsweise eine Innenzahnradpumpe, da diese eine geringe Massenträgheit und eine hohe Volumeneffizienz aufweist und somit einen hoch-dynamischen Wechselbetrieb mit minimaler Hysterese und minimalen Energieverlusten gestattet. Ein Wechsel zwischen Generator- und Motorbetrieb und umgekehrt ist dabei bevorzugt mit einer zeitlichen Auflösung bis zu 50 Hz möglich und auch die Ansteuereinheit ist dazu geeignet ausgebildet. Insbesondere sind die Motor-Pumpe-Einheiten bevorzugt geeignet zusammen mit dem Dämpfer sowohl im Bereich der Fahrzeugaufbaufrequenz, bis zu 5 Hz, als auch im Bereich der Rad-frequenz, bis zu 15 Hz, zu operieren. Innenzahnradpumpen sind beispielsweise aus DE 10 2014 103 958 A1 oder DE 10 2014 103 959 A1 bekannt, deren diesbezüglicher Offenbarungsgehalt in die vorliegende Schrift mit aufgenommen wird.

Weiterhin weist die erste und/oder zweite hydraulische Pumpe bevorzugt einen Pumpenanschluss zum hydraulischen Verbinden mit jeweils einem zugeordneten Stoßdämpfer eines Fahrwerksystems auf. Der Pumpenanschluss einer hydraulischen Pumpe umfasst bzw. besteht jeweils aus insbesondere zwei Leitungsanschlüsse zum Anschließen von zwei Anschlussleitungen zum Verbinden mit zwei Druckkammern eines Stoßdämpfers. Die erfindungsgemäße Vorrichtung wird vorzugsweise dazu verwendet, die beiden Stoßdämpfer einer Achse eines Fahrwerks hydraulisch anzusteuern.

Da entsprechend pro Achse nur eine Elektronikeinheit elektronisch mit dem Fahrzeug zu verbinden ist, kann - wie erwähnt - die Anzahl der elektrischen Schnittstellen zum Fahrzeug reduziert werden. Durch die feste Zuordnung der Elektronikeinheit zu den hydraulischen Pumpen wird eine individuelle Abstimmung der Komponenten zueinander möglich. Zum Beispiel können Kennfelder während der Endprüfung eingelesen und individuell zueinander abgeglichen werden. Dies kann beispielsweise eine sensorlose Regelung der Elektromotoren bis hin zu einer sensorlosen Druckregelung erleichtern.

Bevorzugt sind die Elektromotoren so genannte Nassläufer in denen der Rotor des Elektromotors sich im Hydrauliköl befindet. Bevorzugt wird dabei der Hydrauliköldruck über ein so genanntes Spaltrohr abgefangen wie es beispielsweise in der Druckschrift DE 10 2013 109 522 beschrieben ist. Die diesen Aufbau betreffende Offenbarung der Druckschrift DE 10 2013 109 522 wird entsprechend in den Offenbarungsgehalt der vorliegenden Schrift mit aufgenommen.

Bevorzugt sind die erste hydraulische Pumpe und der erste Elektromotor und/oder die zweite hydraulische Pumpe und der zweite Elektromotor jeweils mechanisch fest miteinander verbunden und bilden jeweils eine kompakte bauliche Einheit, die im Folgenden als Motor-Pumpe-Gruppe bezeichnet wird/werden. Bevorzugt sind Elektromotor und Pumpe dabei unmittelbar aneinander grenzend angeordnet und weisen beispielsweise jeweils korrespondierende Flächen, bevorzugt ebene Stirnflächen, als gemeinsame Grenzfläche auf. Die baulich feste Verbindung von Elektromotor und hydraulischer Pumpe wird beispielsweise durch eine direkte Verschraubung von Motor und Pumpe, durch ein oder mehrere Verbindungsbauteile, durch einen gemeinsamen Träger und/oder durch ein gemeinsames Gehäuse geschaffen, in welchem dann Elektromotor und Pumpe angeordnet sind, wobei das Gehäuse bevorzugt im Wesentlichen oder vollständig geschlossen und besonders bevorzugt dicht ist, etwa wasser- oder spritzwasserdicht.

Dabei sind die beiden Motor-Pumpe-Gruppen vorzugsweise baugleich, das heißt mit jeweils gleichen Eigenschaften und Abmessungen bzw. identisch, ausgestaltet.

Weiterhin weist eine Motor-Pumpe-Gruppe bevorzugt eine Längsrichtung bzw. Längsachse auf, welche bevorzugt durch eine (gerade) Motorachswelle des jeweiligen Elektromotors definiert ist, mit welcher der Elektromotor die jeweilige hydraulische Pumpe antreibt (oder umgekehrt). Dabei kann die jeweils von der Motor-Pumpe-Gruppe wegweisende Seite von Pumpe und/oder Elektromotor als ebene Stirnfläche ausgebildet sein, was eine weitere bauliche Integration der Motor-Pumpe-Gruppe begünstigt. Weiterhin ist der Pumpenanschluss mit Vorteil auf der von der Motor-Pumpe-Gruppe wegweisenden Seite der Pumpe bzw. innerhalb der ebenen Stirnfläche der Pumpe angeordnet.

Bevorzugt weist eine Motor-Pumpe-Gruppe bzw. die dadurch geschaffene bauliche Einheit eine Gesamtlänge entlang der jeweiligen Längsachse im Bereich zwischen 10 und 30 cm auf, die bevorzugt 10, 12, 15, 20, 25 oder 30 cm beträgt, wobei jeder der genannten Werte auch eine Ober- oder Untergrenze des genannten Wertebereichs darstellen kann. Weiterhin weisen bevorzugt die Motor-Pumpe-Gruppen um die jeweilige Längsachse eine vollständig oder im Wesentlichen zylindrische oder quaderförmige Außenform bzw. zwei getrennt oder ein gemeinsames zylindrisches oder quaderförmiges Gehäuse auf, mit einem (maximalen) Durchmesser bzw. einer Kantenlänge (quer zur Längsachse) im Bereich zwischen 60 und 150 mm, der/die bevorzugt 60, 70, 80, 90, 100, 110, 120, 130 oder 150 mm beträgt, wobei jeder der genannten Werte auch eine Ober- oder Untergrenze des genannten Wertebereichs darstellen kann. Das Gehäuse ist bevorzugt im Wesentlichen oder vollständig geschlossen und besonders bevorzugt dicht, etwa wasser- oder spritzwasserdicht, und/oder elektromagnetische Strahlung abschirmend ausgebildet. Weiterhin ist das Gehäuse bevorzugt einstückig bzw. einteilig oder gegebenenfalls mehrstückig ausgebildet und bildet insbesondere eine mechanisch stabile Einheit.

Bevorzugt sind die verschiedenen Baueinheiten der erfindungsgemäßen Vorrichtung, das heißt beide Motor-Pumpe-Gruppen bzw. beide Pumpen und beide Elektromotoren und die gemeinsame Elektronikeinheit, fest miteinander verbunden, beispielsweise aneinander angeflanscht, und bilden eine integrale bauliche Einheit, die im Folgenden auch als Achssatz bezeichnet wird. Ein derartiger Achssatz ist entsprechend eine vormontierbare bzw. vormontierte Vorrichtung, die entsprechend den Montageaufwand beim Anbau an eine Achse bzw. beim Einbau der erfindungsgemäßen Vorrichtung in ein Fahrzeug reduziert. Insbesondere können Montagezeit, Montageschritte, Befestigungspunkte und/oder Haltemittel eingespart werden. Dies vereinfacht auch eine Vormontage einer kompletten Achse eines Kraftfahrzeuges mit aktivem Fahrwerk bzw. aktiven Stoßdämpfern.

Die mechanisch feste Verbindung der verschiedenen Baueinheiten (Elektromotoren, Pumpen, gemeinsame Elektronikeinheit, Motor-Pumpe-Gruppen) der erfindungsgemäßen Vorrichtung bzw. des Achssatzes kann wie oben im Zusammenhang mit den Motor-Pumpe-Gruppen beschrieben erfolgen. Beispielsweise werden jeweils zwei oder mehr Baueinheiten unmittelbar aneinander grenzend angeordnet und weisen dann beispielsweise jeweils korrespondierende Flächen, bevorzugt ebene Stirnflächen, als Grenzflächen auf. Die feste Verbindung der Baueinheiten kann dann durch eine direkte Verschraubung, durch ein oder mehrere Verbindungsbauteile, durch einen gemeinsamen Träger und/oder durch ein gemeinsames Gehäuse bzw. Außengehäuse geschaffen werden, in welchem dann bevorzugt sämtliche Baueinheiten des Achssatzes oder zumindest die Elektromotoren und die gemeinsame Elektronikeinheit angeordnet sind und welches bevorzugt im Wesentlichen oder vollständig geschlossen und besonders bevorzugt dicht ist, etwa wasser- oder spritzwasserdicht, und/oder elektromagnetische Strahlung abschirmend ausgebildet ist. Ein derartiges gemeinsames Gehäuse des Achssatzes weist bevorzugt eine zylindrische oder quaderförmige Außenform auf. Weiterhin ist das Gehäuse bevorzugt einstückig bzw. einteilig oder gegebenenfalls mehrstückig ausgebildet und bildet insbesondere eine mechanisch stabile Einheit.

Bevorzugt sind die verschiedenen Baueinheiten in dem Achssatz bzw. der erfindungsgemäßen Vorrichtung derart angeordnet, dass die gemeinsame Elektronikeinheit baulich unmittelbar an beide Elektromotoren der beiden Motor-Pumpe-Gruppen angrenzt und bevorzugt die gemeinsame Elektronikeinheit und die beiden Elektromotoren jeweils gemeinsame Grenzflächen aufweisen. Dies verkürzt die Wege beispielsweise zwischen der Leistungselektronik und den Elektromotoren, wodurch die EMV-Belastung reduziert wird und wegbedingte Leistungsverluste minimiert werden. Die Elektronikeinheit kann bei der Montage direkt mit den Elektromotoren verbunden werden, beispielsweise durch Steckverbindungen, welche bei der Montage direkt verbunden werden. Bevorzugt ragen beispielsweise Motorphasenkontakte der Elektromotoren in die gemeinsame Elektronikeinheit hinein. Dazu ragen beispielsweise die Motorphasenkontakte der Elektromotoren über ein Gehäuse des jeweiligen Elektromotors bzw. der jeweiligen Motor-Pumpe-Gruppe an einer Stelle hinaus an der die gemeinsame Elektronikeinheit angeordnet ist und somit in die gemeinsame Elektronikeinheit bzw. ein Gehäuse derselben hinein. Es versteht sich, dass jede geeignete elektrische Verbindung zwischen der Elektronikeinheit und den Elektromotoren zum Einsatz kommen kann. Eine kurze Anbindung der Elektronikeinheit an die Elektromotoren ist dabei auch bezüglich des elektromagnetischen Verhaltens vorteilhaft, da die elektrischen Leitungen kurz und besser abgeschirmt sind bzw. sich besser abschirmen lassen. Außerdem lassen sich so Fehler vermeiden, die bei einer aufwändigen Verkabelung auftreten können.

Die relative Anordnung der Baueinheiten zueinander in dem Achssatz und gegebenenfalls die Außenform des Gehäuses des Achssatzes kann je nach den Einbau- bzw. Bauraumbedingungen gewählt werden.

In einer ersten bevorzugten Ausgestaltung des Achssatzes liegen die Längsachsen beider Motor-Pumpe-Gruppen auf einer gemeinsamen Achse, die eine Längsachse bzw. gemeinsame Längsachse der erfindungsgemäßen Vorrichtung bzw. des Achssatzes bildet, was im Folgenden als axiale Anordnung der Motor-Pumpe-Gruppen beschrieben wird. Dabei sind die hydraulischen Pumpen, und vorzugsweise auch die Pumpenanschlüsse, jeweils auf voneinander wegweisenden Seiten der jeweiligen Motor-Pumpe-Gruppen angeordnet, so dass zwischen den Pumpen der jeweiligen Motor-Pumpe-Gruppen die jeweiligen Elektromotoren angeordnet sind. Bevorzugt grenzt die gemeinsame Elektronikeinheit dabei unmittelbar an beide Elektromotoren an. Entsprechend weist die erfindungsgemäße Vorrichtung vorliegend einen längsgestreckten Aufbau auf mit einer Gesamtlänge (gemessen beispielsweise zwischen den Pumpenanschlüssen und/oder Pumpenendflächen bzw. außenliegenden Stirnflächen der beiden Pumpen) entlang der gemeinsamen Längsachse im Bereich zwischen 20 und 90 cm, die beispielsweise 20, 30, 40, 41,2, 50, 60, 70, 80 oder 90 cm beträgt, wobei jeder der genannten Werte auch eine Ober- oder Untergrenze des genannten Wertebereichs darstellen kann. Entsprechend weisen die beiden Motor-Pumpe-Gruppen bzw. die sich gegenüberliegenden, von der jeweiligen Pumpenseite abgewandten Enden der Motor-Pumpe-Gruppen, an denen sich üblicherweise die Elektromotoren befinden und die beispielsweise als ebene Stirnflächen ausgebildet sind, einen Abstand entlang der gemeinsamen Längsachse von 0 bis 30 cm auf, der beispielsweise 0, 1, 2, 3, 5, 7, 10, 15, 20 oder 30 cm beträgt, wobei jeder der genannten Werte auch eine Ober- oder Untergrenze des genannten Wertebereichs darstellen kann.

Eine derartige axiale Anordnung minimiert den Abstand zwischen den Pumpenanschlüssen und den jeweiligen Stoßdämpfern und damit die Länge der entsprechenden Druckleitungen, was die Bauteilkosten senkt und leitungsbedingte, fluid-dynamische Effekte minimiert.

In einer ersten bevorzugten Ausgestaltung des Achssatzes mit axialer Anordnung der Motor-Pumpe-Gruppen ist auch die gemeinsame Elektronikeinheit auf der gemeinsamen Längsachse und dabei vollständig oder wenigstens teilweise axial und/oder radial zwischen den Motor-Pumpe-Gruppen angeordnet.

Im ersteren Fall ragt die gemeinsame Elektronikeinheit radial nicht über die Motor-Pumpe-Gruppen hinaus und ist vollständig in dem Zwischenraum zwischen den beiden Motor-Pumpe-Gruppen angeordnet, so dass die gemeinsame Elektronikeinheit beispielsweise einen (größten) Durchmesser aufweist, der kleiner oder gleich dem Durchmesser der Motor-Pumpe-Gruppen bzw. dessen Außenform ist, wobei die gemeinsame Elektronikeinheit bevorzugt unmittelbar an beiden Elektromotoren angrenzt. Bevorzugt weist entsprechend der Achssatz bzw. die erfindungsgemäße Vorrichtung eine vorzugsweise durchgehende Außenform (in der beispielsweise die verschiedenen Baueinheiten bzw. deren jeweilige Gehäuse bündig und unmittelbar aneinander anschließen) bzw. ein gemeinsames Gehäuse, in dem sämtliche Baueinheiten der erfindungsgemäßen Vorrichtung angeordnet sind, auf, die/das zylindrisch bzw. zylinderförmig mit einem entlang der Längsachse gleichbleibendem Durchmesser oder quaderförmig mit einer entlang der Längsachse gleichbleibenden Kantenlänge quer zur Längsachse ausgebildet ist, der/die im Bereich zwischen 60 und 150 mm liegt und bevorzugt 60, 70, 80, 90, 100, 110, 120, 130 oder 150 mm beträgt, wobei jeder der genannten Werte auch eine Ober- oder Untergrenze des genannten Wertebereichs darstellen kann. Entsprechend weisen bevorzugt die Elektromotoren entlang der Längsachse einen Abstand voneinander auf, der gleich der axialen Breite der gemeinsamen Elektronikeinheit ist.

Alternativ kann die gemeinsame Elektronikeinheit auch teilweise oder vollständig radial außen liegend auf und/oder relativ zu den Motor-Pumpe-Gruppen angeordnet sein. Auch in diesem Fall grenzt die gemeinsame Elektronikeinheit bevorzugt unmittelbar an den Elektromotoren an, beispielsweise an einer gemeinsamen ebenen oder zylindrischen Grenzfläche und ist beispielsweise radial außen bzw. seitlich angeflanscht. Ist die gemeinsame Elektronikeinheit vollständig radial außen liegend angeordnet, so kann der Abstand der Elektromotoren null betragen, das heißt die Elektromotoren grenzen unmittelbar aneinander an, beispielsweise an einer ebenen, senkrecht zur Längsachse verlaufenden Grenz- bzw. Stirnfläche. Dadurch kann die Gesamtlänge des Achssatzes bzw. der erfindungsgemäßen Vorrichtung reduziert werden. Alternativ kann der Abstand der Elektromotoren auch von null verschieden sein, womit der Bauraum zwischen den Elektromotoren beispielsweise für Kühlungszwecke frei bleiben kann.

Alternativ ist die gemeinsame Elektronikeinheit relativ zu den Motor-Pumpe-Gruppen bzw. deren Außenform(en) teilweise radial außen, das heißt über die Außenformen radial hinausragend und zugleich teilweise radial innen angeordnet, und füllt entsprechend den Bauraum zwischen den Elektromotoren teilweise oder vollständig aus. Bevorzugt weist die gemeinsame Elektronikeinheit eine im Längsschnitt zumindest im Wesentlichen T-förmige Außenform bzw. ein im Längsschnitt zumindest im Wesentlichen T-förmiges Gehäuse auf, dessen Mittenabschnitt im Zwischenraum zwischen den Elektromotoren angeordnet ist und dessen Seitenabschnitte radial außen, bevorzugt unmittelbar auf den Elektromotoren angeordnet sind und diese in axialer Richtung teilweise oder vollständig überdecken, wobei die den Motor-Pumpe-Gruppen zugewandten Seiten mit der jeweiligen Außenform der Motor-Pumpe-Gruppen korrespondieren und beispielsweise konkav bzw. zylinderabschnittsförmig ausgebildet sind.

Dies ergibt einen besonders großen Bauraum für die gemeinsame Elektronikeinheit und gestattet es beispielsweise in der Elektronikeinheit Bauteile, insbesondere Elektronikbauteile, mit großen Abmessungen zu verbauen ohne den radialen Bauraum zu erhöhen. In diesem Fall liegt der Abstand der Elektromotoren bevorzugt zwischen 5 und 10 cm und beträgt beispielsweise 5, 6, 8 oder 10 cm, wobei jeder der genannten Werte auch eine Ober- oder Untergrenze des genannten Wertebereichs darstellen kann.

Alternativ kann die gemeinsame Elektronikeinheit in axialer Richtung vollständig zwischen den Elektromotoren bzw. den Motor-Pumpe-Gruppen angeordnet und dabei relativ zu den Motor-Pumpe-Gruppen bzw. deren Außenform weiterhin teilweise radial außen und teilweise radial innen angeordnet sein. Auch dabei lassen sich Bauteile mit großen Abmessungen in der gemeinsamen Elektronikeinheit verbauen.

In einer alternativen, bevorzugten Ausgestaltung liegen die Längsachsen der beiden Motor-Pumpe-Gruppen parallel zueinander (und fallen nicht zusammen) und/oder die Motor-Pumpe-Gruppen bzw. deren Längsachsen sind parallel oder anti-parallel ausgerichtet, bevorzugt derart, dass die beiden Motor-Pumpe-Gruppen in Richtung der Längsachsen versetzt oder besonders bevorzugt bündig angeordnet sind. Bei paralleler Ausrichtung der Motor-Pumpe-Einheiten liegen entsprechend die pumpenseitigen Enden der beiden Motor-Pumpe-Gruppen in einer gemeinsamen Ebene, die senkrecht auf den Längsachsen der Motor-Pumpe-Gruppen steht, und die elektromotorseitigen Enden der beiden Motor-Pumpe-Gruppen liegen in einer weiteren gemeinsamen Ebene, die ebenfalls senkrecht auf den Längsachsen der Motor-Pumpe-Gruppen steht. Dabei bildet die weitere gemeinsame Ebene bevorzugt die Grenzfläche mit der gemeinsamen Elektronikeinheit. Bei anti-paralleler Ausrichtung der Motor-Pumpe-Gruppen liegt bevorzugt das pumpenseitige Ende einer der beiden Motor-Pumpe-Gruppen in einer gemeinsamen, senkrecht auf den Längsachsen der Motor-Pumpe-Einheiten stehenden Ebene mit dem elektromotorseitigen Ende der jeweils anderen Motor-Pumpe-Gruppe und die gemeinsame Elektronikeinheit ist bevorzugt seitlich angeordnet.

Gemäß einem weiteren Aspekt der Erfindung ist ein Bausatz zum Bereitstellen der erfindungsgemäßen Vorrichtung vorgesehen, welcher die gemeinsame Elektronikeinheit und die erste hydraulische Pumpe und den ersten Elektromotor und/oder die erste Motor-Pumpe-Gruppe sowie die zweite hydraulische Pumpe und den zweiten Elektromotor und/oder die zweite Motor-Pumpe-Gruppe umfasst. Insbesondere können der erste und zweite Elektromotor dabei jeweils eine Stirnseite aufweisen, die zur gegenseitigen Montage aneinander eingerichtet ist. Des Weiteren kann die gemeinsame Elektronikeinheit eingerichtet sein, sowohl an dem ersten Elektromotor als auch an dem zweiten Elektromotor montiert zu werden, sodass sie sowohl mit dem ersten Elektromotor als auch mit dem zweiten Elektromotor elektrisch verbunden ist.

Weiterhin umfasst der Bausatz bevorzugt ein oder mehrere Verbindungsbauteile, einen gemeinsamen Träger und/oder ein gemeinsames Gehäuse, welches wie oben beschrieben ausgestaltet sein kann und in welchem bevorzugt sämtliche Baueinheiten der erfindungsgemäßen Vorrichtung zur Anordnung vorgesehen sind.

Ein erfindungsgemäßes Fahrwerksystem für ein Fahrzeug umfasst zumindest einen ersten und zweiten hydraulisch steuerbaren Stoßdämpfer mit jeweils zwei beispielsweise durch einen beweglichen Dämpferkolben getrennten Dämpfer- bzw. Druckkammern, welche bevorzugt einer gemeinsamen Fahrwerkachse zugeordnet oder an dieser angeordnet sind, sowie eine wie oben beschriebene Vorrichtung zum Bereitstellen von hydraulischer Energie in einem Fahrwerksystem eines Fahrzeugs, wobei die erste Motor-Pumpe-Gruppe bzw. die erste hydraulische Pumpe die Druckkammern des ersten Stoßdämpfers hydraulisch miteinander verbindet und die zweite Motor-Pumpe-Gruppe bzw. die zweite hydraulische Pumpe die Druckkammern des zweiten Stoßdämpfers hydraulisch miteinander verbindet. Dadurch kann beispielsweise eine "weiche" oder "harte" Dämpfung eingestellt werden, indem beispielsweise Druckstöße aus den Kammern durch die jeweilige Motor-Pumpe-Einheit mehr oder weniger gedämpft bzw. gedrosselt werden. In diesem Fall wird somit die jeweilige Motor-Pumpe-Einheit hydraulisch angetrieben, so dass der Elektromotor als Elektromotorgenerator betrieben werden kann und somit elektrische Energie rückgewonnen werden kann (Rekuperation). Weiterhin kann auch die Null- bzw. Ruhelage des Stoßdämpfers aktiv bzw. gezielt eingestellt werden und auch während des Fahrbetriebs verändert werden (aktives Fahrwerk). Es versteht sich, dass das Fahrwerksystem eine oder mehrere weitere Achsen aufweisen kann, die jeweils mit einer weiteren erfindungsgemäßen Vorrichtung zur Steuerung der entsprechenden Stoßdämpfer ausgestattet sein können.

Bevorzugt liegt in dem erfindungsgemäßen Fahrwerksystem die Länge der Hydraulikleitungen zwischen einer Motor-Pumpe-Einheit bzw. deren Pumpe und dem Stoßdämpfer im Bereich zwischen 10 und 150 cm, die beispielsweise 10, 20, 30, 40, 50, 60, 70, 80, 90, 100, 120 oder 150 cm beträgt, wobei jeder der genannten Werte auch eine Ober- oder Untergrenze des genannten Wertebereichs darstellen kann.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen dargestellten Ausführungsbeispiele beschränkt.
Fig. 1 zeigt eine perspektivische Ansicht eines ersten Ausführungsbeispiels der erfindungsgemäßen Vorrichtung.
Fig. 2 zeigt eine schematische Ansicht eines Fahrwerksystems mit einer erfindungsgemäßen Vorrichtung gemäß dem ersten Ausführungsbeispiel.
Fig. 3 zeigt eine schematische Ansicht eines zweiten Ausführungsbeispiels der erfindungsgemäßen Vorrichtung.
Fig. 4 zeigt eine schematische Ansicht eines dritten Ausführungsbeispiels der erfindungsgemäßen Vorrichtung.
Fig. 5 zeigt eine schematische Ansicht eines vierten Ausführungsbeispiels der erfindungsgemäßen Vorrichtung.
Fig. 6 zeigt eine schematische Ansicht eines fünften Ausführungsbeispiels der erfindungsgemäßen Vorrichtung.

### DETAILLIERTE BESCHREIBUNG

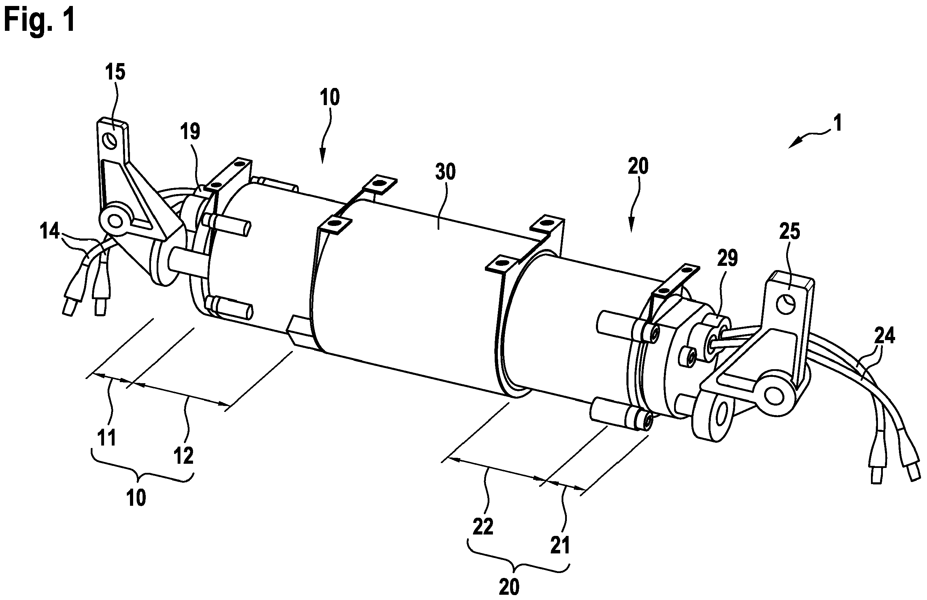

Fig. 1 zeigt eine perspektivische Ansicht eines ersten Ausführungsbeispiels einer erfindungsgemäßen Vorrichtung 1 zum Bereitstellen von hydraulischer Energie in einem aktiven Fahrwerksystem 2 eines Fahrzeugs. Die Vorrichtung umfasst eine erste 10 und eine zweite 20 Motor-Pumpe-Gruppe, die baugleich bzw. identisch ausgestaltet sind und jeweils eine hydraulische Innenzahnradpumpe 11, 21 und einen Elektromotor bzw. Elektromotorgenerator 12, 22 umfassen. Jede der Motor-Pumpe-Gruppen 10, 20 bildet eine bauliche Einheit mit einer/m durchgehend geschlossenen, spritzwasserdichten Außenhülle bzw. Außengehäuse, in welcher/m jeweils die Pumpe 11, 21 und der Elektromotor 12, 22 entlang einer Längsrichtung der jeweiligen Motor-Pumpe-Gruppe 10, 20 in einer Reihe angeordnet sind. Dabei ist die Längsrichtung einer Motor-Pumpe-Gruppe 10, 20 jeweils durch eine nicht dargestellte, innenliegende, gerade Motorachswelle definiert, mit welcher der Elektromotor 12, 22 die jeweilige Pumpe 11, 21 antreibt. Die Pumpen 11, 21 weisen jeweils einen Pumpenanschluss 19, 29 mit zwei Leitungsanschlüssen auf, in welche in den vorliegenden Ausführungsbeispielen jeweils zwei Anschlussleitungen 14, 24 eingebracht sind, die zum Anschließen an die jeweils zwei Druckkammern eines Stoßdämpfers 16, 26 eines aktiven Fahrwerksystems 2 vorgesehen sind. Die beiden Motor-Pumpe-Gruppen 10, 20 sind in dem ersten Ausführungsbeispiel in einer axialen Anordnung angeordnet, das heißt deren jeweilige Längsachsen fallen zusammen und definieren die gemeinsame Längsachse der erfindungsgemäßen Vorrichtung 1.

Zwischen den Elektromotoren 12, 22 der beiden Motor-Pumpe-Gruppen 10, 20 ist ebenfalls auf der gemeinsamen Längsachse eine gemeinsame Elektronikeinheit 30 (ECU, Electronic Control Unit) angeordnet, die in dem dargestellten Ausführungsbeispiel vollständig zwischen den beiden Elektromotoren 12, 22 angeordnet ist und radial nicht über die Motor-Pumpe-Gruppen hinausragt. Dabei weist die gemeinsame Elektronikeinheit 30 an beiden gegenüberliegenden axialen Enden jeweils ebene Stirnflächen auf, die an korrespondierenden axialen Enden der Elektromotoren 12, 22 mit jeweils ebenfalls ebenen Stirnflächen eingreifen und dort angeflanscht sind.

Die erfindungsgemäßen Vorrichtung 1 bildet somit eine bauliche Einheit in der die verschiedenen Baueinheiten fest miteinander verbunden sind bzw. aneinander angeflanscht sind und in der folgenden Reihenfolge angeordnet sind: erste hydraulische Pumpe 11, erster Elektromotor 12, gemeinsame Elektronikeinheit 30, zweiter Elektromotor 22, zweite hydraulische Pumpe 21.

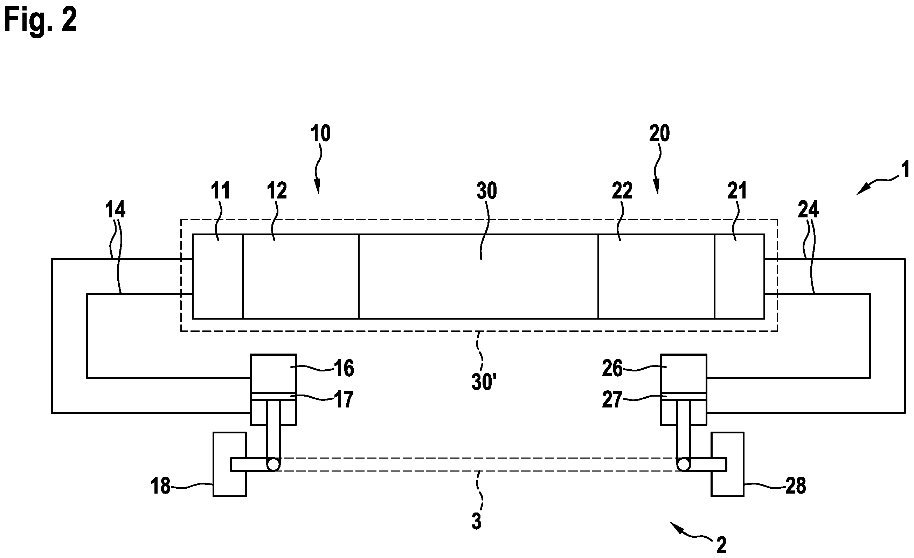

Die beiden Motor-Pumpe-Gruppen 10, 20 sind in dem ersten Ausführungsbeispiel über die daran jeweils angeflanschte gemeinsame Elektronikeinheit 30 fest verbunden. Alternativ oder zusätzlich kann zur Ausbildung der erfindungsgemäßen Vorrichtung 1 auch ein in Fig. 2 schematisch dargestellter Träger 30' beispielsweise in Form eines gemeinsamen Gehäuses vorgesehen sein, in welchem sämtliche Baueinheiten der erfindungsgemäßen Vorrichtung 1 angeordnet sind. In dem dargestellten Ausführungsbeispiel sind weiterhin Aufnahmen 15, 25 zum Anbringen der erfindungsgemäßen Vorrichtung in einem Fahrzeug, beispielsweise in der Nähe oder an einer Fahrzeug- bzw. Fahrwerkachse 3 vorgesehen.

In dem ersten Ausführungsbeispiel weist die erfindungsgemäße Vorrichtung 1 eine Gesamtlänge von einem Pumpenanschluss 19 zum gegenüberliegenden Pumpenanschluss 29 von 41,2 cm entlang der gemeinsamen Längsachse auf sowie eine, abgesehen von Befestigungsmitteln, im Wesentlichen zylindrische Außenform mit einem Durchmesser von ca. 120 mm. Dabei liegt die Längsachse der erfindungsgemäßen Vorrichtung 1 mit Vorteil parallel zu der Fahrwerkachse 3 bzw. zu einer Verbindungslinie der einer Fahrwerkachse zugeordneten Räder 18, 28. Dadurch wird der Abstand der Pumpenanschlüsse 19, 29 zu den jeweiligen Stoßdämpfern minimiert.

In Fig. 2 ist ein Fahrwerksystem 2 mit einer erfindungsgemäßen Vorrichtung 1 gemäß dem ersten Ausführungsbeispiel schematisch dargestellt. Darin sind die jeweils von den Pumpen 11, 21 ausgehenden jeweils zwei hydraulischen Leitungen 14, 24 mit den beiden Druckkammern jeweils eines Stoßdämpfers 16, 26 verbunden, welche im einfachsten Fall durch einen in einem Dämpferzylinder axial verfahrbaren Kolben 17, 27 getrennt sind. In dem dargestellten Ausführungsbeispiel sind die Zylinder der Stoßdämpfer 16, 26 mit der gefederten Masse des Fahrzeugs bzw. der Karosserie verbunden, während der Kolben 17, 27 mit der ungefederten Masse des Fahrzeugs bzw. einem Rad 18, 28 und gegebenenfalls, soweit vorhanden, auch mit einer Fahrwerkachse 3 verbunden bzw. gekoppelt ist. Dies kann jedoch auch umgekehrt ausgestaltet sein. Weiterhin wurde in der schematischen Darstellung von Fig. 2 auf üblicherweise zusätzlich vorgesehene Federelemente, beispielsweise ein Luft- und/oder Stahlfederelement, verzichtet.

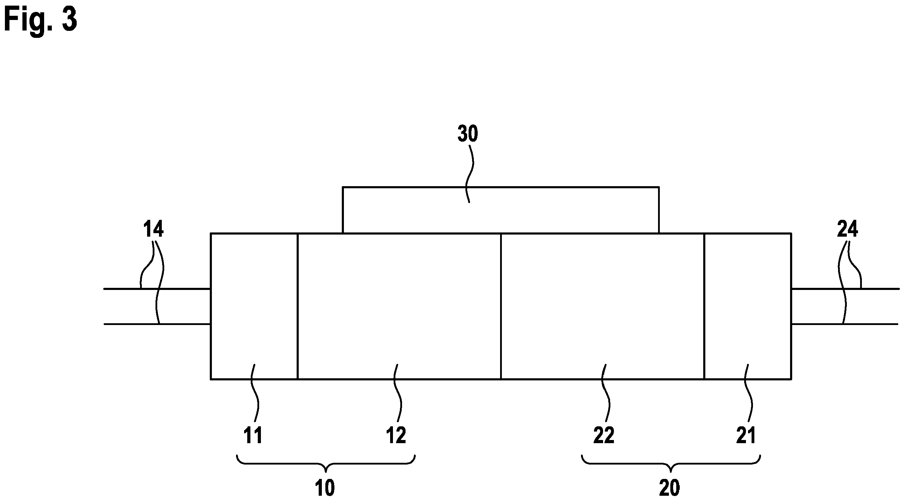

Fig. 3 zeigt eine schematische Ansicht eines zweiten Ausführungsbeispiels der erfindungsgemäßen Vorrichtung 1, in welchem die beiden Motor-Pumpe-Gruppen 10, 20 wiederum in einer axialen Anordnung auf einer gemeinsamen Längsachse angeordnet sind. Im Gegensatz zu dem ersten Ausführungsbeispiel grenzen hier jedoch die beiden Elektromotoren 12, 22 unmittelbar aneinander während die gemeinsame Elektronikeinheit 30 seitlich an beiden Elektromotoren 12, 22 angeordnet ist, beispielsweise angeflanscht ist.

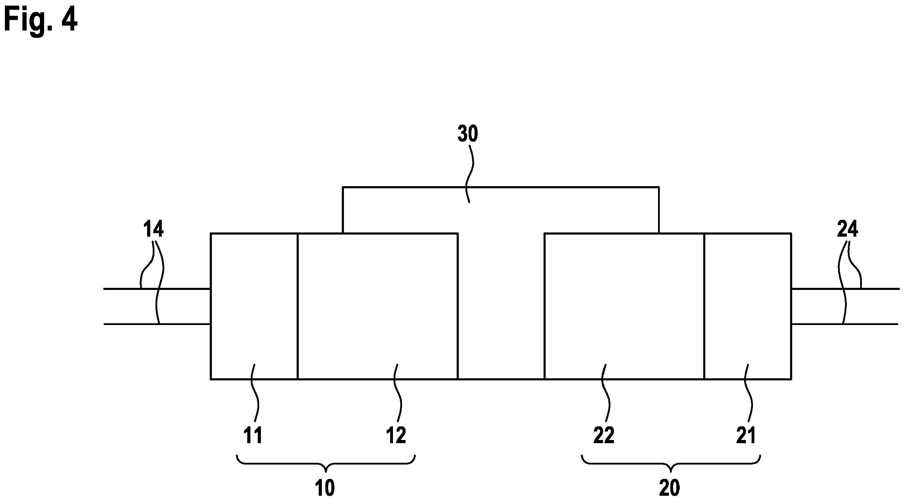

Fig. 4 zeigt eine schematische Ansicht eines dritten Ausführungsbeispiels der erfindungsgemäßen Vorrichtung 1, in welchem die beiden Motor-Pumpe-Gruppen 10, 20 wiederum in einer axialen Anordnung auf einer gemeinsamen Längsachse angeordnet sind. Im Gegensatz zu den ersten beiden Ausführungsbeispielen ist die gemeinsame Elektronikeinheit 30 hier teilweise seitlich, das heißt radial außen auf den Elektromotoren, und teilweise zwischen den Elektromotoren, das heißt auf der Längsachse, angeordnet, so dass sich in dem dargestellten Längsschnitt eine T-förmige Außenform, insbesondere ein T-förmiges Gehäuse für die gemeinsame Elektronikeinheit 30 ergibt.

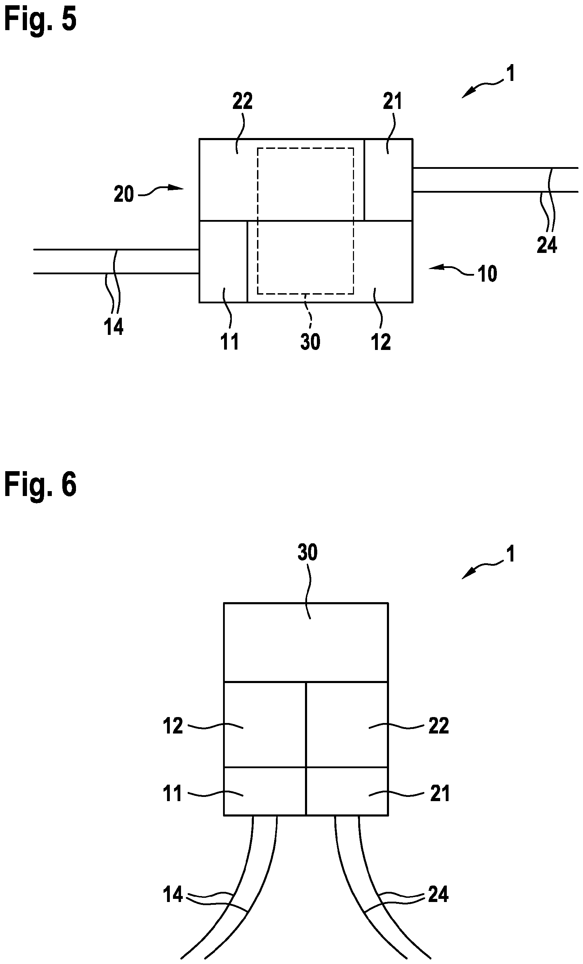

Fig. 5 zeigt eine schematische Ansicht eines vierten Ausführungsbeispiels der erfindungsgemäßen Vorrichtung 1, in welchem die Längsachsen beider Motor-Pumpe-Gruppen 10, 20 parallel liegen, im Gegensatz zum ersten Ausführungsbeispiel jedoch nicht zusammenfallen. Die beiden Motor-Pumpe-Gruppen 10, 20 sind dabei bündig und anti-parallel angeordnet, das heißt die Pumpen 11, 21 und die jeweiligen Pumpenanschlüsse 19, 29 weisen zu gegenüberliegenden, voneinander wegweisenden Seiten. Die gemeinsame Elektronikeinheit 30 ist in dem dritten Ausführungsbeispiel seitlich an beiden Motor-Pumpe-Gruppen 10, 20 angeflanscht und überspannt beide Elektromotoren 12, 22 zumindest teilweise. Mit Vorteil kann die erfindungsgemäße Vorrichtung 1 gemäß des vierten Ausführungsbeispiels derart im Fahrzeug bzw. Fahrwerksystem 2 angeordnet werden, dass die zueinander parallelen Längsachsen der beiden Motor-Pumpe-Einheiten 10, 20 auch parallel zu der Fahrwerkachse 3 liegen. Im Vergleich mit dem ersten Ausführungsbeispiel ist dabei jedoch die Gesamtlänge der erfindungsgemäßen Vorrichtung 1 entlang der Längsachse verringert, im Wesentlichen auf die Länge einer Motor-Pumpe-Gruppe 10, 20, womit gegebenenfalls ein im Fahrzeug vorhandener Bauraum besser ausgenutzt werden kann.

Fig. 6 zeigt eine schematische Ansicht eines fünften Ausführungsbeispiels der erfindungsgemäßen Vorrichtung 1, in welchem die Längsachsen beider Motor-Pumpe-Gruppen 10, 20 wiederum parallel liegen und nicht zusammenfallen. Die beiden Motor-Pumpe-Gruppen 10, 20 sind dabei auch bündig aber parallel ausgerichtet. Entsprechend sind die pumpenseitigen Enden der beiden Motor-Pumpe-Gruppen 10, 20 in einer ersten Ebene angeordnet, die senkrecht auf den Längsachsen der beiden Motor-Pumpe-Gruppen 10, 20 steht, während die elektromotorseitigen Enden der Motor-Pumpe-Gruppen 10, 20 in einer weiteren gemeinsamen Ebene angeordnet sind, die ebenfalls senkrecht auf den Längsrichtungen der Motor-Pumpe-Einheiten 10, 20 steht. Die gemeinsame Elektronikeinheit 30 ist an den elektromotorseitigen Enden der Motor-Pumpe-Gruppen 10, 20 angeflanscht und überspannt beide Elektromotoren 12, 22. Dabei sind die Längsachsen der beiden Motor-Pumpe-Gruppen 10, 20 mit Vorteil senkrecht zu einer Fahrwerkachse 3 ausgerichtet.

## Patentansprüche

1. Vorrichtung (1) zum Bereitstellen von hydraulischer Energie in einem Fahrwerksystem (2) eines Fahrzeugs, umfassend:
- eine erste hydraulische Pumpe (11) und einen ersten Elektromotor (12) zum Antreiben der ersten hydraulischen Pumpe,
- eine zweite hydraulische Pumpe (21) und einen zweiten Elektromotor (22) zum Antreiben der zweiten hydraulischen Pumpe und
- eine gemeinsame Elektronikeinheit (30), welche eingerichtet ist, den ersten und den zweiten Elektromotor anzusteuern,
wobei die beiden Elektromotoren und die beiden Pumpen vorzugsweise baugleich ausgestaltet sind und/oder jeweils erste und zweite Motor-Pumpe-Gruppen (10, 20) bilden.

2. Vorrichtung (1) nach Anspruch 1, welche genau einen Steueranschluss und genau einen Leistungsanschluss, insbesondere einen Hochvoltanschluss, oder zwei oder mehr Steuer- und/oder Leistungsanschlüsse aufweist, welche jeweils bevorzugt an der gemeinsamen Elektronikeinheit (30) angeordnet sind, und/oder wobei die gemeinsame Elektronikeinheit (30) genau einen Logikteil und/oder genau einen Mikrocontroller aufweist und/oder wobei die maximale Ausgangsleistung einer Leistungselektronik der gemeinsamen Elektronikeinheit kleiner oder gleich ist der Summe der maximalen Leistung der beiden Elektromotoren, vorzugsweise kleiner oder gleich 100%, 95%, 90%, 75% oder 50%.

3. Vorrichtung (1) nach einem der vorhergehenden Ansprüche, wobei die maximale Leistung der Elektromotoren (12, 22) jeweils im Bereich zwischen 0,1 und 5 kW liegt.

4. Vorrichtung (1) nach einem der vorhergehenden Ansprüche, wobei die Elektromotoren (11, 22) vierquadrantenfähig sind und/oder als Elektromotorgenerator ausgebildet sind.

5. Vorrichtung (1) nach einem der vorhergehenden Ansprüche, wobei die hydraulischen Pumpen (11, 21) jeweils einen Pumpenanschluss (19, 29) aufweisen und/oder als Innenzahnradpumpen ausgebildet sind.

6. Vorrichtung (1) nach einem der vorhergehenden Ansprüche, wobei die erste hydraulische Pumpe (11) und der erste Elektromotor (12) eine erste bauliche Einheit bzw. Motor-Pumpe-Gruppe (10) und/oder die zweite hydraulische Pumpe (21) und der zweite Elektromotor (22) eine zweite bauliche Einheit bzw. Motor-Pumpe-Gruppe (20) bilden, bevorzugt mit jeweils einer Längsrichtung bzw. Längsachse, welche bevorzugt durch eine Motorachswelle des jeweiligen Elektromotors definiert wird.

7. Vorrichtung (1) nach einem der Ansprüche 1 bis 6, **dadurch gekennzeichnet, dass** beide Motor-Pumpe-Gruppen (10, 20) oder zumindest beide Elektromotoren (12, 22) und die gemeinsame Elektronikeinheit (30) mechanisch fest miteinander verbunden sind, bevorzugt eine vormontierte Einheit bilden und/oder in einem gemeinsamen, bevorzugt einteiligen, geschlossenen und/oder dichten Gehäuse angeordnet sind, wobei bevorzugt die gemeinsame Elektronikeinheit unmittelbar an beide Elektromotoren der Motor-Pumpe-Gruppen angrenzt und besonders bevorzugt Motorphasenkontakte der Elektromotoren in die gemeinsame Elektronikeinheit hineinragen.

8. Vorrichtung (1) nach einem der Ansprüche 6 oder 7, **dadurch gekennzeichnet, dass** die Längsachsen beider Motor-Pumpe-Gruppen (10, 20) auf einer gemeinsamen Achse liegen, die eine Längsachse der Vorrichtung bildet und/oder die hydraulischen Pumpen (11, 21) jeweils voneinander weg weisen, wobei bevorzugt die beiden Elektromotoren (12, 22) einen Abstand von 0 bis 30 cm aufweisen und/oder die Vorrichtung eine Gesamtlänge im Bereich zwischen 20 und 90 cm aufweist.

9. Vorrichtung (1) nach Anspruch 8, **dadurch gekennzeichnet, dass** die gemeinsame Elektronikeinheit (30) auf der gemeinsamen Achse und/oder vollständig oder teilweise zwischen den Motor-Pumpe-Gruppen (10, 20) angeordnet ist, wobei die Vorrichtung bevorzugt ein(e) vollständig oder im Wesentlichen zylindrische(s) oder quaderförmige(s) Außenform bzw. Gehäuse (30') aufweist, besonders bevorzugt mit einem Durchmesser bzw. einer Kantenlänge im Bereich zwischen 60 und 150 mm.

10. Vorrichtung (1) nach Anspruch 8, **dadurch gekennzeichnet, dass** die gemeinsame Elektronikeinheit (30) vollständig oder teilweise seitlich bzw. radial außen auf den Motor-Pumpe-Gruppen (10, 20) angeordnet ist, wobei der axiale Abstand der Elektromotoren (12, 22) bevorzugt null beträgt.

11. Vorrichtung (1) nach Anspruch 8, **dadurch gekennzeichnet, dass** die gemeinsame Elektronikeinheit (30) relativ zu den Motor-Pumpe-Gruppen (10, 20) bzw. deren Außenform teilweise radial außen und teilweise radial innen angeordnet ist, wobei bevorzugt der axiale Abstand der Elektromotoren (12, 22) im Bereich zwischen 5 und 10 cm liegt und/oder die gemeinsame Elektronikeinheit einen T-förmigen Längsschnitt aufweist oder in axialer Richtung vollständig zwischen den Elektromotoren angeordnet ist.

12. Vorrichtung (1) nach einem der Ansprüche 6 oder 7, **dadurch gekennzeichnet, dass** die Längsachsen beider Motor-Pumpe-Gruppen (10, 20) parallel liegen und/oder die Motor-Pumpe-Einheiten parallel oder anti-parallel ausgerichtet sind, bevorzugt derart, dass die beiden Motor-Pumpe-Gruppen versetzt oder bündig angeordnet sind.

13. Bausatz zum Bereitstellen der Vorrichtung (1) nach einem der Ansprüche 1 bis 12, umfassend die gemeinsame Elektronikeinheit (30) und die erste und zweite hydraulische Pumpe (11, 21) und den ersten und zweiten Elektromotor (12, 22) bzw. die erste und zweite Motor-Pumpe-Gruppe (10, 20) sowie bevorzugt ein oder mehrere Verbindungsbauteile, einen gemeinsamen Träger und/oder ein gemeinsames Gehäuse (30').

14. Fahrzeugachse umfassend eine Vorrichtung (1) nach einem der Ansprüche 1 bis 12, wobei die Fahrzeugachse bevorzugt vormontiert ist und/oder zwei Stoßdämpfer (16, 26) aufweist, die besonders bevorzugt mit den Pumpen (11, 21) der Vorrichtung hydraulisch verbunden sind.

15. Fahrwerksystem (2) für ein Fahrzeug, umfassend zumindest einen ersten und zweiten hydraulisch steuerbaren Stoßdämpfer (16, 26), welche bevorzugt einer gemeinsamen Fahrwerkachse (3) zugeordnet oder an einer gemeinsamen Fahrwerkachse (3) angeordnet sind, sowie eine Vorrichtung (1) nach einem der Ansprüche 1 bis 12, wobei die erste Motor-Pumpe-Gruppe (10) Druckkammern des ersten Stoßdämpfers (16) hydraulisch verbindet und die zweite Motor-Pumpe-Gruppe (20) Druckkammern des zweiten Stoßdämpfers (26) hydraulisch verbindet und bevorzugt die Vorrichtung an der Fahrwerkachse (3) angeordnet ist.
